(19) Europäisches Patentamt
European Patent Office
Office européen des brevets

(11) **EP 4 155 271 A2**

(12) **EUROPEAN PATENT APPLICATION**

(43) Date of publication:
**29.03.2023   Bulletin 2023/13**

(21) Application number: **22206781.1**

(22) Date of filing: **10.11.2022**

(51) International Patent Classification (IPC):
$C01G\ 53/00^{(2006.01)}$   $H01M\ 4/525^{(2010.01)}$

(52) Cooperative Patent Classification (CPC):
**C01G 53/50; C01G 53/42; H01M 4/525;**
C01P 2002/52; C01P 2004/61; C01P 2006/12;
C01P 2006/17; C01P 2006/80; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **23.09.2021   CN 202111115015**

(71) Applicant: **Guizhou Zhenhua E-CHEM Inc.**
**Guiyang City, Guizhou 550014 (CN)**

(72) Inventors:
• **ZHOU, Chaoyi**
**Guiyang City, 550014 (CN)**
• **XIANG, Qianxin**
**Guiyang City, 550014 (CN)**
• **HUANG, Jin**
**Guiyang City, 550014 (CN)**

• **YU, Ye**
**Guiyang City, 550014 (CN)**
• **WANG, Lijuan**
**Guiyang City, 550014 (CN)**
• **WU, Yang**
**Guiyang City, 550014 (CN)**
• **HU, Ansheng**
**Guiyang City, 550014 (CN)**

(74) Representative: **Dehns**
**St. Bride's House**
**10 Salisbury Square**
**London EC4Y 8JD (GB)**

Remarks:
A request for correction of the description has been filed pursuant to Rule 139 EPC. A decision on the request will be taken during the proceedings before the Examining Division (Guidelines for Examination in the EPO, A-V, 3.).

(54) **CATHODE MATERIAL FOR A LITHIUM ION BATTERY AND PREPARATION METHOD AND APPLICATION THEREOF**

(57)   The invention belongs to the technical field of lithium ion battery and specifically relates to a cathode material of lithium ion battery, a preparation method and application thereof. The cathode material of the invention has a porous structure, wherein the pore volume of mesoporous with pore diameter of 2-20nm accounts for 90% or more of the total pore volume, comprising at least two sintering and at least two crushing step of the raw material after mixing. Compared with the conventional lithium-ion battery cathode material, the lithium-ion battery cathode material of the present invention contains mainly mesopores, and the pore size of mesopores is mainly in the range of 2-20nm, there are hardly large pores inside the particles, the distribution of pores between particles is relatively reasonable, which can provide a favorable channel for lithium ion transmission, so a high capacity can be provided and simultaneously the increase in impedance during the battery cycle is relatively small.

Fig. 1

EP 4 155 271 A2

**Description**

**Technical Field**

The present invention relates to the technical field of lithium-ion batteries, and in particular to a lithium-ion battery cathode material, a preparation method and an application thereof.

**Background Art**

In 2019, the new energy market ushered in drastic changes. With the increasing number of electric vehicles, the demand for energy density and cost performance of lithium-ion batteries is increasing. Among them, cobalt in lithium cobalt nickel manganese ternary cathode materials is a scarce resource with high price. In order to improve the cost performance and pursue high energy density, the content of nickel or manganese element should be appropriately increased to reduce the amount of cobalt. Among them, the increase of nickel content can provide high-capacity batteries, but with the increase of nickel content, the structure of the material is unstable, and a solution reacts with electrolyte; moreover, due to the repeated charge and discharge, cracks are generated in the cathode material, which deteriorates the cycle life of the lithium-ion battery, increases the impedance and reduces the capacity. Therefore, it is urgent to develop new materials or find new materials to replace the scarce resource cobalt or reduce the amount of cobalt in the material. Chinese patent CN102280636A discloses a positive active material, a preparation method thereof and a rechargeable lithium battery including the positive active material. The positive active material of the rechargeable lithium battery is obtained by preparing a precursor by a coprecipitation method and then mixing and sintering with a lithium source. The material includes pores with an average diameter of about 10nm to about 60nm and a porosity of about 0.5% to about 20%. The material has good particle strength, thus preventing or reducing the occurrence of breakage after extrusion. The material tends not to react with the electrolyte and shows good thermal stability, thus providing a high-capacity rechargeable lithium battery. However, the chemical formula of the material is $Li_aNi_xCo_yMn_zM_kO_2$, where $0.45 \leq x \leq 0.65$, $0.15 \leq y \leq 0.25$, $0.15 < z \leq 0.35$, the cobalt content of the material is high, the capacity is insufficient, and the cost performance cannot meet the requirements.

The China patent CN108123119A discloses a nickel-based active material for lithium secondary batteries, a preparation method thereof and a lithium secondary battery including a positive electrode containing the nickel-based active material. The nickel-based active material disclosed by the present patent can be obtained by firstly processing a mixture of a lithium precursor and a metal hydroxide at a low temperature, and then performing heat treatment at a high temperature in an oxygen atmosphere. The material can include secondary particles. The secondary particle includes agglomerates of at least two plate-like primary particles. At least part of the secondary particle has a structure in which the plate-like primary particles are radially arranged, and a material with the external porosity of the secondary particles being larger than the internal porosity of the secondary particles, but the present patent does not indicate what aspect of the problem has been improved.

The China patent CN1856890 discloses lithium composite oxide particles for lithium secondary battery cathode materials, a lithium secondary battery positive electrode using the particles, and a lithium secondary battery. The lithium composite oxide particles for lithium secondary battery cathode materials disclosed by the present patent can enhance the low-temperature load characteristics of the battery and also enhance the coatability when manufacturing the cathode. The material shall meet the following condition (a) and at least one of the following conditions (b) and (c) when measured by a mercury intrusion method. Condition (a): on the mercury intrusion curve, when the pressure increases from 50MPa to 150MPa, the mercury intrusion is less than or equal to 0.02 cm$^3$/g. Condition (B): on the mercury intrusion curve, when the pressure increases from 50MPa to 150MPa, the mercury intrusion is greater than or equal to 0.01 cm$^3$/g. Condition (c): the average pore radius is 10-100 nm, and the pore size distribution curve has a main peak with its peak top at the pore radius of 0.5-50 $\mu$m, and a sub-peak with its peak top at the pore radius of 80-300 nm. The present patent mainly solves the low-temperature performance, but fails to give consideration to the high-temperature performance.

The China patent CN104272520A discloses a non-aqueous electrolyte secondary battery and a manufacturing method thereof. The present patent discloses a cathode mixed material layer constituting a positive electrode of the non-aqueous electrolyte secondary battery. In the pore size distribution curve measured by a mercury porosimeter, there is a peak A with differential pore capacity and a peak B closer to a small pore diameter side than the peak A in the range of 0.05 $\mu$m to 2 $\mu$m; in the pore size distribution curve, there is a minimum point C where the differential pore volume becomes a minimum value; and the ratio ($X_C/X_L$) of the differential pore capacity $X_L$ of the larger one of the differential pore capacity $X_A$ of the peak A and the differential pore capacity $X_B$ of the peak B, to the differential pore capacity $X_C$ of the minimum point C is 0.6 or more. The present patent mainly aims at reducing the gas production of batteries by adding overcharging additives in the process of manufacturing the batteries.

## Summary of the Invention

The technical problem to be solved by the present invention is as follows: in the prior art, the pore diameter of cathode materials is too large, and most of them belong to macroporous materials; and because of the existence of these macropores, the migration path of lithium ions is too long, therefore, relatively high capacity cannot be provided for a lithium-ion battery, and particles of the cathode material will crack in the process of repeated charge and discharge of the lithium-ion battery, resulting in capacity attenuation, internal resistance increase, gas production and the like of the lithium-ion battery in the cycle process.

In view of the shortcomings of the prior art, the present invention provides a cathode material for the lithium-ion battery. The cathode material comprises mesopores with relatively small diameters, and these mesopores provide more shorter paths for lithium ion migration, so that the lithium-ion battery has relatively high capacity; meanwhile, the lithium-ion cathode material prepared by the method of the present invention basically does not crack in the charge and discharge process of the lithium-ion battery, and thus, the capacity attenuation and the like of the lithium-ion battery material in the cycle process is prevented. The present invention also provides a preparation method of the lithium-ion cathode material and a lithium-ion battery containing the lithium-ion cathode material. The present invention also provides an application of the lithium-ion cathode material or the lithium-ion battery in the fields of digital batteries, power batteries or energy storage batteries.

The technical solution of the present invention is:

the present invention provides a lithium-ion battery cathode material which has a porous structure, wherein a pore volume of mesopores with a pore size of 2-20nm accounts for 90% of a pore volume of total pores.

Preferably, a pore volume of pores with a pore size of 3-20 nm accounts for 60% or more of a total mesopore volume of the mesopores.

Preferably, a pore volume of pores with a pore size of 5-19 nm accounts for 40% or more of a total pore volume of the mesopores.

Preferably, the specific surface area of the cathode material is 0.25-1.5m$^2$/g, preferably, the $D_V50$ particle size of the cathode material is 2.00-6.00 $\mu$m, and further preferably, the total free lithium content of the cathode material is less than 2000ppm.

Preferably, the cathode material contains lithium element, nickel element and manganese element, and the content of the nickel element in the cathode material is greater than that of manganese element.

Preferably, the cathode material contains elements as defined in a chemical formula 1; and

the chemical formula 1 is $Li_{1+a}Ni_xMn_yCo_zA_mO_2$, where $0 \leq a \leq 0.25$, $0.5 < x \leq 0.97$, $0 < y \leq 0.42$, $0 \leq z \leq 0.09$, $0 \leq m \leq 0.03$ ,
and A is selected from any one or two or more elements of Mn, Co, Al, Zr, Y, Rb, Cs, W, Ce, Mo, Ba, Ti, Mg, Ta, Nb, Ca, V, Sc, Sr and B, or from phosphorus-containing compounds containing at least one element of Ti, Al, Mg, Zr, La and Li.

The present invention further provides a preparation method of the lithium-ion battery cathode material. The preparation method comprises steps of mixing raw materials, then sintering at least twice and crushing at least twice.

Preferably, the first sintering temperature is 750-980°C, and the sintering time is 8-40 hours; the secondary sintering temperature is 650-920°C, and the sintering time is 5-20 hours; and preferably, the sintering atmosphere is air, oxygen or mixed gas of air and oxygen.

Preferably, the preparation method of the above-mentioned lithium-ion battery cathode material further comprises the following steps:

(1) mixing crushed products with a metal A source ;
(2) sintering and crushing a mixture in step (1).

Preferably, the sintering temperature in step (2) is 300-780°C, and the sintering time is 3-14 hours; and further preferably, the sintering atmosphere is air, oxygen or mixed gas of air and oxygen. Preferably, according to the above-mentioned preparation method, the Li source is lithium-containing oxide, lithium-containing fluoride or lithium-containing salt, and preferably, the Li source is selected from one or more than two of lithium hydroxide anhydrous, lithium hydroxide monohydrate, lithium carbonate, lithium nitrate, lithium acetate and lithium fluoride. The present invention also provides a lithium-ion battery cathode material prepared by the above-mentioned preparation method.

The present invention further provides a lithium-ion battery positive electrode which comprises a current collector and a cathode material loaded on the current collector. The cathode material is the above-mentioned lithium-ion battery cathode material.

The present invention further provides a lithium-ion battery, which is characterized by comprising a positive electrode, a negative electrode and a lithium salt-containing electrolyte. The positive electrode is the above-mentioned lithium-ion battery positive electrode.

The present invention further provides an application of the above-mentioned lithium-ion battery cathode material, or the above-mentioned lithium-ion battery positive electrode, or the above-mentioned lithium-ion battery in the field of digital batteries, power batteries or energy storage batteries.

The present invention has the following beneficial effects:

Compared with the conventional lithium-ion battery cathode material, the lithium-ion battery cathode material of the present invention mainly contains the mesopores; the pore size of the mesopores is mainly in the range of 2-20nm, the pore volume of mesopores with the pore size of 2-20nm accounts for more than 90% of the total pore volume, there are almost no macropores in particles, the particle structure is stable, and the particles will not crack during repeated charge and discharge, so the lithium-ion battery cathode material has a good cycle performance; the distribution of pores among the particles is relatively reasonable, which can provide a favorable channel for lithium ion transmission, therefore, relatively high capacity can be provided, and at the same time, the increase of impedance in the battery cycle process is relatively small; and if it exceeds the above range, the transmission distance of lithium ions will increase, the capacity will decrease, and the impedance will increase rapidly.

## Brief Description of the Drawings

FIG. 1 is a curve chart of the pore size distribution of a lithium-ion battery cathode material prepared in one example 1.
FIG. 2 is a curve chart of the pore size distribution of a lithium-ion battery cathode material prepared in one example 2.
FIG. 3 is a curve chart of the pore size distribution of a lithium-ion battery cathode material prepared in one example 6.
FIG. 4 is a curve chart of the pore size distribution of a lithium-ion battery cathode material prepared in one example 7.

## Detailed Description of the Invention

For For the purpose of making the objectives, technical solution and technical effect of examples of the present invention more clear, clear and complete description will be made to the technical solutions of the examples of the present invention. The following described examples are merely a part of examples of the present invention and not all the examples. Based on the examples of the present invention, all other examples obtained by a person of ordinary skill in the art without involving any inventive effort all fall within the scope of the present invention.

In the description of the present invention, the pore size distribution refers to the change of proportion of pore volume of different pore sizes in the total pore volume with the pore size.

In the description of the present invention, mesopores refer to pores with a pore size of 2-50nm, that is, pores with a pore size of 2nm or more to 50nm or less, micropores are pores with a pore size of less than 2nm, and macropores are pores with a pore size of more than 50nm.

In order to better understand above technical solution, the technical solution of the present invention is further detailed.

The present invention provides a lithium-ion battery cathode material which has a porous structure, wherein a pore volume of mesopores with a pore size of 2-20nm accounts for 90% of a pore volume of total pores.

In a preferred embodiment of the present invention, a pore volume of pores with a pore size of 3-20 nm accounts for 60% or more of a total mesopore volume of the mesopores.

In a preferred embodiment of the present invention, a pore volume of pores with a pore size of 5-19 nm accounts for 40% or more of a total pore volume of the mesopores.

In another preferred embodiment of the present invention, the specific surface area of the cathode material is 0.25-1.5m$^2$/g, preferably, the $D_V50$ particle size of the cathode material is 2.00-6.00 $\mu$m, and further preferably, the total free lithium content of the cathode material is less than 2000ppm. In another preferred embodiment of the present invention, the cathode material contains lithium, nickel and manganese, and the content of the nickel in the cathode material is greater than that of the manganese.

In another preferred embodiment of the present invention, the cathode material contains elements shown in a chemical formula 1;

the chemical formula 1 is $Li_{1+a}Ni_xMn_yCo_zA_mO_2$, where $0 \leq a \leq 0.25$, $0.5 < x \leq 0.97$, $0 < y \leq 0.42$, $0 \leq z \leq 0.09$, $0 \leq m \leq 0.03$,
and A is selected from any one or two or more elements of Mn, Co, Al, Zr, Y, Rb, Cs, W, Ce, Mo, Ba, Ti, Mg, Ta, Nb, Ca, V, Sc, Sr and B, or from phosphorus-containing compounds containing at least one element of Ti, Al, Mg, Zr, La and Li.

The present invention further provides a preparation method of the lithium-ion battery cathode material. The preparation method comprises steps of mixing raw materials, then sintering at least twice and crushing at least twice.

The first sintering temperature is 750-980°C, and the sintering time is 8-40 hours; the second sintering temperature is 650-920°C, and the sintering time is 5-20 hours; and preferably, the sintering atmosphere is air, oxygen or mixed gas of air and oxygen.

In a preferred embodiment of the present invention, the preparation method of the above-mentioned lithium-ion battery cathode material further comprises the following steps:

(1) mixing crushed products with a metal A source;
(2) sintering and crushing a mixture in step (1).

The sintering temperature in step (2) is 300-780°C, and the sintering time is 3-14 hours; and further preferably, the sintering atmosphere is air, oxygen or mixed gas of air and oxygen.

In a preferred embodiment of the present invention, according to the above-mentioned preparation method, the Li source is lithium-containing oxide, lithium-containing fluoride or lithium-containing salt, and preferably, the Li source is selected from one or more than two of lithium hydroxide anhydrous, lithium hydroxide monohydrate, lithium carbonate, lithium nitrate, lithium acetate and lithium fluoride.

The present invention also provides a lithium-ion battery cathode material prepared by the above-mentioned preparation method.

In another preferred embodiment of the present invention, the lithium-ion battery cathode material of the present invention, which is prepared by the preparation method comprising steps of mixing raw materials, then sintering at least twice and crushing at least twice.

Preferably, the first sintering temperature is 750-980°C, and the sintering time is 8-40 hours; the second sintering temperature is 650-920°C, and the sintering time is 5-20 hours.

Preferably, , the preparation method of the above-mentioned lithium-ion battery cathode material further comprises the following steps:

(1) mixing crushed products with a metal A source;
(2) sintering and crushing a mixture in step (1).

Preferably, the sintering temperature in step (2) is 300-780°C, and the sintering time is 3-14 hours. The present invention further provides a lithium-ion battery positive electrode which comprises a current collector and a cathode material loaded on the current collector. The cathode material is the above-mentioned lithium-ion battery cathode material.

The present invention further provides a lithium-ion battery, which is characterized by comprising a positive electrode, a negative electrode and a lithium salt-containing electrolyte. The positive electrode is the above-mentioned lithium-ion battery positive electrode.

The lithium-ion battery of the present invention further comprises a diaphragm and an aluminum-plastic film. Specifically, the electrode comprises a positive electrode and a negative electrode. The positive electrode is made of a positive electrode current collector, a positive active material coated on the positive electrode current collector, a binder, a conductive improver and the like; and the positive active material is the above-mentioned lithium-ion cathode material. The negative electrode is made of a current collector, a negative active material coated on the current collector, a binder, a conductive improver and the like. The diaphragm is a PP/PE film commonly used in this industry, and is used for separating the positive electrode from the negative electrode; and the aluminum-plastic film is a container of the positive electrode, the negative electrode, the diaphragm and the electrolyte.

The binder includes polyvinyl alcohol, carboxymethyl cellulose, hydroxypropyl cellulose, polyvinyl chloride, carboxylated polyvinyl chloride, polyvinyl fluoride, ethylene oxide-containing polymers, polyvinylpyrrolidone, polyurethane, polytetrafluoroethylene, poly(1,1-difluoroethylene), polyethylene, polypropylene, styrene butadiene rubber, acrylated styrene butadiene rubber, epoxy resin, nylon, the like, and combinations thereof, and is used for improving the adhesion characteristics between positive active material particles and between the positive active material particles and the current collector.

The conductive improver includes one or more than two of a carbon-based material, a metal-based material and a conductive polymer. The carbon-based material is one or more than two of natural graphite, artificial graphite, carbon black, acetylene black, Ketjenblack or carbon fibers, the metal-based material is metal powder or metal fibers of copper, nickel, aluminum or silver, and the conductive polymer is a polyphenylene derivative.

The present invention further provides an application of the above-mentioned lithium-ion battery cathode material, or the above-mentioned lithium-ion battery positive electrode, or the above-mentioned lithium-ion battery in the fields of digital batteries, power batteries or energy storage batteries.

The technical effects of the present invention are further illustrated by the following specific examples.

Information of reagents and equipment used in the following examples is shown in Table 1 and Table 2.

Table 1 Information of reagents used in Examples

| Name of reagents | Grade | Model | Manufacturer |
|---|---|---|---|
| nanometer zirconium oxide | ceramic grade | --- | Xuancheng Jingrui New Materials (Anhui) Co., Ltd. |
| nanometer titanium dioxide | ceramic grade | --- | Xuancheng Jingrui New Materials (Anhui) Co., Ltd. |
| tungsten oxide | ceramic grade | --- | Xuancheng Jingrui New Materials (Anhui) Co., Ltd. |
| nanometer magnesium oxide | ceramic grade | --- | Xuancheng Jingrui New Materials (Anhui) Co., Ltd. |
| nanometer aluminum oxide | ceramic grade | --- | Xuancheng Jingrui New Materials (Anhui) Co., Ltd. |
| rubidium carbonate | ceramic grade | --- | Xuancheng Jingrui New Materials (Anhui) Co., Ltd. |
| nanometer niobium oxide | ceramic grade | --- | Xuancheng Jingrui New Materials (Anhui) Co., Ltd. |
| strontium titanate | ceramic grade | --- | Xuancheng Jingrui New Materials (Anhui) Co., Ltd. |
| barium titanate | ceramic grade | --- | Xuancheng Jingrui New Materials (Anhui) Co., Ltd. |
| nanometer cerium oxide | ceramic grade | --- | Xuancheng Jcingrui New Materials Co., Ltd. of Anhui |
| boric oxide | reagent grade | --- | Nanjing Chemical Reagent Plant |
| nanometer yttrium oxide | ceramic grade | --- | Xuancheng Jingrui New Materials (Anhui) Co., Ltd. |
| aluminum nitrate nonahydrate | battery grade | 99.50% | Dalian First Organic Chemical Co., Ltd. |
| tetrabutyl titanate | reagent grade | 99.80% | Nanjing Chemical Reagent Plant |
| zirconium n-Butoxide | reagent grade | 99.80% | Nanjing Chemical Reagent Plant |
| cerium carbonate | reagent grade | 96.0% | Zibo Ruibokang Rare Earth Material Co., Ltd. |

(continued)

| Name of reagents | Grade | Model | Manufacturer |
|---|---|---|---|
| lithium hydroxide anhydrous | battery grade | 99.5wt% | Yahua Lithium Technology (Sichuan) Co., Ltd. |
| lithium hydroxide monohydrate | battery grade | 56.0wt% | Jiangxi Ganfeng Lithium Group Co., Ltd. |
| lithium carbonate | battery grade | 56.0wt% | Jiangxi Ganfeng Lithium Group Co., Ltd. |
| lithium nitrate | battery grade | 99.5wt% | Shanghai Oujin Industrial Co., Ltd. |
| lithium acetate | battery grade | 99.5wt% | Sichuan State Lithium Materials Co., Ltd. |
| high-purity oxgen | industrial grade | Purity: 99.9% | Guizhou Yagang Gas Co., Ltd. |
| conductive carbon black | battery grade | Super P Li | TIMCAL |
| N-methylpyrrolidone | battery grade | Content: 99.5% | Nanjing Jinlong Chemical Co., Ltd. |
| polyvinylidene fluoride | battery grade | Solef 6020 | SOLVAY Chemical Co., Ltd. Of America |
| aluminum foil | battery grade | Thickness: 16 $\mu$m | Aluminum Company of America |
| electronic adhesive tape | electronic grade | Green width: 10mm | Minnesota Mining and Manufacturing Company |
| lithium piece | electronic grade | Diameter $\Phi$: 20mm; purity: greater than or equal to 99.9% | Shanghai Shunyu Metal Materials Co., Ltd. |
| electrolyte | electronic grade | LIB301, propylene carbonate (PC): ethylene carbonate (EC): diethyl carbonate (DEC)=1:1:1 (volume ratio), lithium salt LiPF6 concentration: 1mol/L | Shenzhen Capchem Technology Co., Ltd. |
| diaphragm | ---- | PP/PE/PP three-layer material, Celgard M825, thickness: 16 $\mu$m | Celgard Company of America |
| aluminum-plastic film | industrial grade | total thickness: 160 $\mu$m | Dai Nippon Printing Co., Ltd |

Table 2 Information of equipment used in Examples

| Name of equipment | Model | Manufacturer |
|---|---|---|
| laser particle size analyzer | MSU-2000 | Malvern Panalytical Ltd |
| micromeritics automatic surface area and porosity analyzer | TriStarII3020 | Micromeritics Instruments Corporation |
| inductively coupled plasma optical emission spectrometer | iCAP-7400 | Thermo Electron Corporation |
| High constant temperature formation system | LIP-3AHB06 | Zhejiang HangKe Technology Incorporated Company |

(continued)

| Name of equipment | Model | Manufacturer |
|---|---|---|
| High-efficiency vacuum drying oven | KP-BAK-03E-02 | Kerui Mechnical and Electrical Limited |
| Airflow pulverizer | MX-50 | YiXing Juneng Ultra Fine Grinding Equipment Co., Ltd. |
| Roller kiln | 36m | Huayou New Energy Kiln Equipment Co., Ltd. |

**Example I**

Material mixing: select a 200L plow mixer, start stirring, add 46.11 kg of lithium hydroxide monohydrate, 0.256 kg of nanometer titanium dioxide and 100.0 kg of nickel manganese hydroxide precursor $Ni_{0.68}Mn_{0.32}(OH)_2$ (battery grade, purchased from Guangdong Jiana Energy Technology Co., Ltd.), and stir for 2 hours for later use;

first sintering: adopt a 36m roller kiln, set the sintering temperature at 930°C, introduce the mixed gas of air and oxygen (the oxygen content is 60%, the gas flow rate is 8L/min), load mixed materials into the roller kiln for first sintering, keep the temperature constant for 20 hours, cool the materials to a room temperature, and pulverize the materials with an air pulverizer to obtain primary sintered semi-finished products;
secondary sintering: adopt a 36m roller kiln, set the sintering temperature at 800°C, introduce the mixed gas of air and oxygen (the oxygen content is 60%, the gas flow rate is 8L/min), load the obtained primary sintered semi-finished products into the 36m roller kiln for secondary sintering, keep the temperature constant for 8 hours, cool the materials to a room temperature, pulverize the materials with an air pulverizer, and then demagnetize to obtain secondary sintered semi-finished products;
secondary mixing: put the secondary sintered semi-finished products into a fusion machine, start stirring, and then add 0.248 kg of nanometer titanium dioxide, and mix for 30 minutes; and
third sintering: adopt a 36m roller kiln, set the sintering temperature at 750°C, introduce the mixed gas of air and oxygen (the oxygen content is 60%, the gas flow rate is 8L/min), load the secondary mixed materials into the 36m roller kiln for third sintering, keep the temperature constant for 6 hours, cool the materials to a room temperature, pulverize the materials with an air pulverizer, demagnetize, and sieve to obtain the cathode material.

The chemical formula of the above cathode material obtained after digestion with dilute hydrochloric acid and ICP detection is $LiNi_{0.68}Mn_{0.32}Ti_{0.0063}O_2$.

**Example 2**

Material mixing: select a 200L plow mixer, start stirring, add 45.87 kg of lithium hydroxide monohydrate and 100 kg of nickel manganese cobalt hydroxide precursor $Ni_{0.65}Co_{0.1}Mn_{0.25}(OH)_2$ (battery grade, purchased from Guizhou Zhongwei Zhengyuan New Material Co., Ltd.), and stir for 2 hours for later use;

first sintering: adopt a 36m roller kiln, set the sintering temperature at 940°C, introduce the mixed gas of air and oxygen (the oxygen content is 55%, the gas flow rate is 6L/min), load mixed materials into the roller kiln for first sintering, keep the temperature constant for 13 hours, cool the materials to a room temperature, and pulverize the materials with an air pulverizer to obtain primary sintered semi-finished products;
secondary sintering: adopt a 36m roller kiln, set the sintering temperature at 850°C, introduce the mixed gas of air and oxygen (the oxygen content is 55%, the gas flow rate is 6L/min), load the obtained primary sintered semi-finished products into the 36m roller kiln for secondary sintering, keep the temperature constant for 14 hours, cool the materials to a room temperature, pulverize the materials with an air pulverizer, and then demagnetize to obtain secondary sintered semi-finished products;
secondary mixing: put the secondary sintered semi-finished products into a fusion machine, start stirring, and then add 4.43 kg of strontium carbonate into the 36m roller kiln, and mix for 30 minutes; and
third sintering: adopt a 36m roller kiln, set the sintering temperature at 780°C, introduce the mixed gas of air and oxygen (the oxygen content is 55%, the gas flow rate is 6L/min), load the secondary mixed materials into the 36m roller kiln for third sintering, keep the temperature constant for 7 hours, cool the materials to a room temperature, pulverize the materials with an air pulverizer, demagnetize, and sieve to obtain the cathode material.

The chemical formula of the above cathode material obtained after digestion with dilute hydrochloric acid and ICP detection is $LiNi_{0.65}Co_{0.1}Mn_{0.25}Sr_{0.03}O_2$.

**Example 3**

Material mixing: select a 200L plow mixer, start stirring, add 29.8 kg of lithium hydroxide, anhydrous, 0.377 kg of aluminum oxide and 100 kg of nickel manganese hydroxide precursor $Ni_{0.97}Mn_{0.03}(OH)_2$ (battery grade, purchased from Guangdong Jiana Energy Technology Co., Ltd.), and stir for 2 hours for later use;

first sintering: adopt a 36m roller kiln, set the sintering temperature at 750°C, introduce oxygen (the gas flow rate is 10L/min), load mixed materials into the roller kiln for first sintering, keep the temperature constant for 40 hours, cool the materials to a room temperature, and pulverize the materials with an air pulverizer to obtain primary sintered semi-finished products;
secondary sintering: adopt a 36m roller kiln, set the sintering temperature at 650°C, introduce oxygen (the gas flow rate is 10L/min), load the obtained primary sintered semi-finished products into the 36m roller kiln for secondary sintering, keep the temperature constant for 5 hours, cool the materials to a room temperature, pulverize the materials with an air pulverizer, and then demagnetize to obtain secondary sintered semi-finished products;
secondary mixing: put the secondary sintered semi-finished products into a mixing tank, start stirring, add 200 kg of deionized water and 0.614 kg of zirconium n-butoxide solution, mix for 50 minutes, and filter to obtain filter cakes; and
third sintering: adopt a 36m roller kiln, set the sintering temperature at 550°C, introduce oxygen (the oxygen flow rate is 10L/min), load the secondary mixed filter cakes into the 36m roller kiln for third sintering, keep the temperature constant for 4 hours, cool the materials to a room temperature, pulverize the materials with an air pulverizer, demagnetize, and sieve to obtain the cathode material.

The chemical formula of the above cathode material obtained after digestion with dilute hydrochloric acid and ICP detection is $Li_{1.15}Ni_{0.97}Mn_{0.03}Al_{0.0037}Zr_{0.0016}O_2$.

**Example 4**

Material mixing: select a 200L plow mixer, start stirring, add 51.97 kg of lithium hydroxide monohydrate, 0.244 kg of boric oxide and 100 kg of nickel manganese cobalt hydroxide precursor $Ni_{0.78}Co_{0.07}Mn_{0.15}(OH)_2$ (battery grade, purchased from Jingmen Genlinmei New Material Co., Ltd.), and stir for 2 hours for later use;

first sintering: adopt a 36m roller kiln, set the sintering temperature at 880°C, introduce oxygen (the gas flow rate is 8L/min), load mixed materials into the roller kiln for first sintering, keep the temperature constant for 25 hours, cool the materials to a room temperature, and pulverize the materials with an air pulverizer to obtain primary sintered semi-finished products;
secondary sintering: adopt a 36m roller kiln, set the sintering temperature at 800°C, introduce oxygen (the gas flow rate is 8L/min), load the obtained primary sintered semi-finished products into the 36m roller kiln for secondary sintering, keep the temperature constant for 6 hours, cool the materials to a room temperature, pulverize the materials with an air pulverizer, and then demagnetize to obtain secondary sintered semi-finished products;
secondary mixing: put the secondary sintered semi-finished products into a fusion machine, start stirring, add 0.104 kg of boric oxide, and mix for 40 minutes; and
third sintering: adopt a 36m roller kiln, set the sintering temperature at 500°C, introduce oxygen (the gas flow rate is 8L/min), load the secondary mixed materials into the 36m roller kiln for third sintering, keep the temperature constant for 8 hours, cool the materials to a room temperature, pulverize the materials with an air pulverizer, demagnetize, and sieve to obtain the cathode material $Li_{1.14}Ni_{0.78}Co_{0.07}Mn_{0.15}B_{0.01}O_2$.

The chemical formula of the above cathode material obtained after digestion with dilute hydrochloric acid and ICP detection is $Li_{1.14}Ni_{0.77}Co_{0.07}Mn_{0.15}B_{0.01}O_2$.

**Example 5**

Material mixing: select a 200L plow mixer, start stirring, add 48.46 kg of lithium hydroxide monohydrate and 100 kg of nickel manganese cobalt hydroxide precursor $Ni_{0.79}Co_{0.02}Mn_{0.19}(OH)_2$ (battery grade, purchased from Guangdong Jiana Energy Technology Co., Ltd.), and stir for 2 hours for later use;

first sintering: adopt a 36m roller kiln, set the sintering temperature at 860°C, introduce oxygen (the gas flow rate is 7L/min), load mixed materials into the roller kiln for first sintering, keep the temperature constant for 25 hours, cool the materials to a room temperature, and pulverize the materials with an air pulverizer to obtain primary sintered semi-finished products;

secondary sintering: adopt a 36m roller kiln, set the sintering temperature at 780°C, introduce oxygen (the gas flow rate is 7L/min), load the obtained primary sintered semi-finished products into the 36m roller kiln for secondary sintering, keep the temperature constant for 7 hours, cool the materials to a room temperature, pulverize the materials with an air pulverizer, and then demagnetize to obtain secondary sintered semi-finished products;

secondary mixing: put the secondary sintered semi-finished products into a mixing tank, start stirring, add 80 kg of deionized water, stir for 30 minutes, then add a solution containing phosphorus and a solution containing aluminum simultaneously (weigh 0.23 kg of aluminum sulfate and dissolve the aluminum sulfate in 2 kg of deionized water, and then weigh 0.165 kg of ammonium dihydrogen phosphate and dissolve ammonium dihydrogen phosphate in 5 kg of deionized water), mix for 40 minutes, and filter to obtain filter cakes; and

third sintering: adopt a 36m roller kiln, set the sintering temperature at 300°C, introduce air (the air flow rate is 15L/min), load the secondary mixed filter cakes into the 36m roller kiln for third sintering, keep the temperature constant for 14 hours, cool the materials to a room temperature, pulverize the materials with an air pulverizer, demagnetize, and sieve to obtain the cathode material.

The chemical formula of the above cathode material obtained after digestion with dilute hydrochloric acid and ICP detection is $Li_{1.06}Ni_{0.79}Co_{0.02}Mn_{0.1}gAl_{0.0013}P_{0.0013}O_2$.

## Example 6

Material mixing: select a 200L plow mixer, start stirring, add 43.24 kg of lithium carbonate and 100 kg of nickel manganese cobalt hydroxide precursor $Ni_{0.62}Co_{0.03}Mn_{0.35}(OH)_2$ (battery grade, purchased from Guangdong Jiana Energy Technology Co., Ltd.), and stir for 2 hours for later use; first sintering: adopt a 36m roller kiln, set the sintering temperature at 970°C, introduce air (the air flow rate is 15L/min), load mixed materials into the roller kiln for first sintering, keep the temperature constant for 8 hours, cool the materials to a room temperature, and pulverize the materials with an air pulverizer to obtain primary sintered semi-finished products; and

secondary sintering: adopt a 36m roller kiln, set the sintering temperature at 910°C, introduce air (the air flow rate is 15L/min), load the obtained primary sintered semi-finished products into the 36m roller kiln for secondary sintering, keep the temperature constant for 20 hours, cool the materials to a room temperature, pulverize the materials with an air pulverizer, and then demagnetize to obtain the cathode material.

The chemical formula of the above cathode material obtained after digestion with dilute hydrochloric acid and ICP detection is $Li_{1.08}Ni_{0.62}Co_{0.03}Mn_{0.35}O_2$.

## Example 7

Material mixing: select a 200L plow mixer, start stirring, add 43.24 kg of lithium carbonate and 100 kg of nickel manganese cobalt hydroxide precursor $Ni_{0.62}Co_{0.03}Mn_{0.35}(OH)_2$ (battery grade, purchased from Guangdong Jiana Energy Technology Co., Ltd.), and stir for 2 hours for later use; and

first sintering: adopt a 36m roller kiln, set the sintering temperature at 970°C, introduce air (the air flow rate is 15L/min), load mixed materials into the roller kiln for first sintering, keep the temperature constant for 8 hours, cool the materials to a room temperature, and sieve to obtain the cathode material.

The chemical formula of the above cathode material obtained after digestion with dilute hydrochloric acid and ICP detection is $Li_{1.08}Ni_{0.62}Co0.03Mn0.3502$.

## Example 8

Material mixing: select a 200L plow mixer, start stirring, add 46.96 kg of lithium hydroxide monohydrate, 0.256 kg of nanometer titanium dioxide and 100.0 kg of nickel manganese hydroxide precursor $Ni_{0.4}Mn_{0.6}(OH)_2$ (battery grade, purchased from Guangdong Jiana Energy Technology Co., Ltd.), and stir for 2 hours for later use;

first sintering: adopt a 36m roller kiln, set the sintering temperature at 930°C, introduce the mixed gas of air and oxygen (the oxygen content is 60%, the gas flow rate is 8L/min), load mixed materials into the roller kiln for first sintering, keep the temperature constant for 20 hours, cool the materials to a room temperature, and pulverize the materials with an air pulverizer to obtain primary sintered semi-finished products;

secondary sintering: adopt a 36m roller kiln, set the sintering temperature at 800°C, introduce the mixed gas of air and oxygen (the oxygen content is 60%, the gas flow rate is 8L/min), load the obtained primary sintered semi-finished products into the 36m roller kiln for secondary sintering, keep the temperature constant for 8 hours, cool the materials to a room temperature, pulverize the materials with an air pulverizer, and then demagnetize to obtain secondary sintered semi-finished products;

secondary mixing: put the secondary sintered semi-finished products into a fusion machine, start stirring, and then add 0.248 kg of nanometer titanium dioxide, and mix for 30 minutes; and third sintering: adopt a 36m roller kiln, set the sintering temperature at 750°C, introduce the mixed gas of air and oxygen (the oxygen content is 60%, the gas flow rate is 8L/min), load the secondary mixed materials into the 36m roller kiln for third sintering, keep the temperature constant for 6 hours, cool the materials to a room temperature, pulverize the materials with an air pulverizer, demagnetize, and sieve to obtain the cathode material.

The chemical formula of the above cathode material obtained after digestion with dilute hydrochloric acid and ICP detection is $LiNi_{0.4}Mn_{0.6}Ti_{0.0063}O_2$.

**Experiment 1**

The pore size distribution curve, specific surface area, particle size and total free lithium content of Examples 1-8 are measured according to the following method.

(1) Determination method of pore size distribution curve

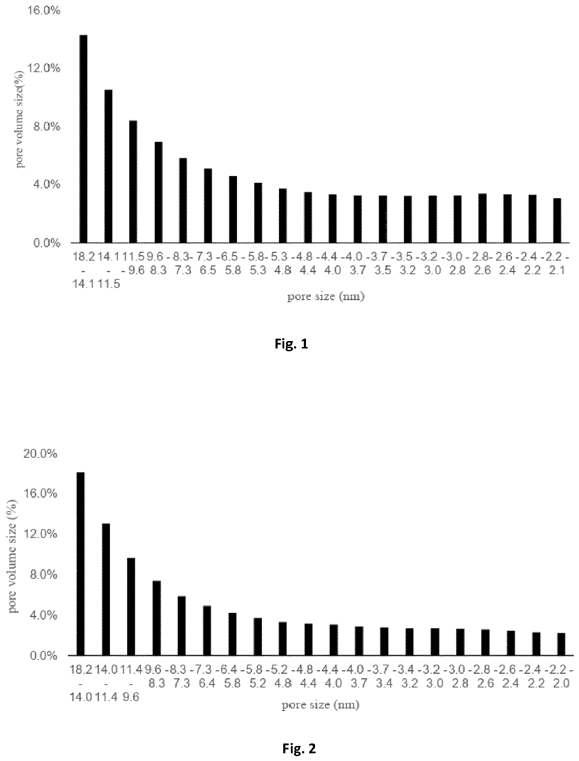

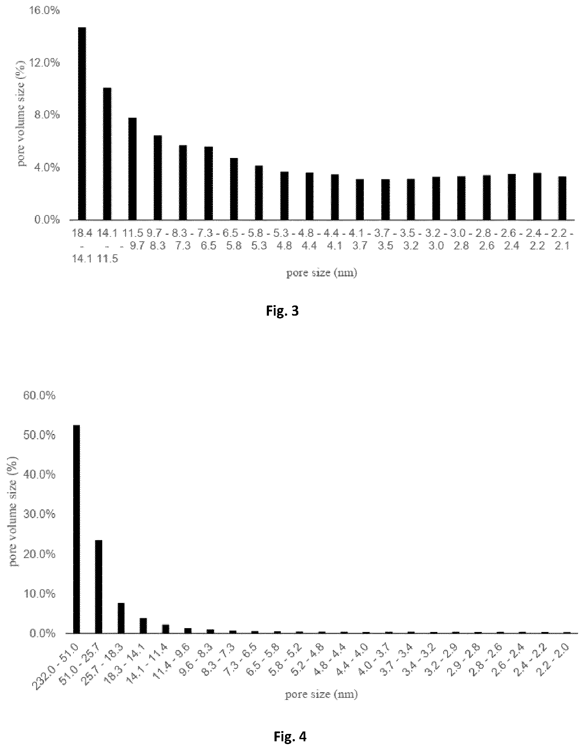

A desorption side isotherm is measured by a Micromeritics automatic surface area and porosity analyzer (TriStarII3020), and then the pore size distribution curve with pore diameters as abscissas and pore volume percentages (percentage of the pore volume of mesopores with different pore sizes in the pore volume of total mesopores) as ordinates is obtained by using the desorption side isotherm and calculating with a BJH method. As shown in FIGs. 1-4, the test results of proportion of the mesopores with the pore sizes of 2-20nm (proportion of the pore volume of the mesopores with the pore sizes of 2-20 in the pore volume of total pores), proportion of the pores with the pore sizes of 3-20nm (proportion of the pore volume of the pores with the pore sizes of 3-20 in the pore volume of total mesopores), and proportion of the pores with the pore sizes of 5-19nm (proportion of the pore volume of the pores with the pore sizes of 5-19 in the pore volume of total mesopores) are shown in Table 3.

(2) Determination method of specific surface area

The specific surface area of the present invention is determined by referring to a gravimetric method in GB/T 19587-2004 gas adsorption using the BET Method, and is determined by the Micromeritics automatic surface area and porosity analyzer (TriStarII3020). The test results are shown in Table 3.

(3) Determination method of particle size

The particle size of the present invention is measured by referring to a GB/T19077-2016 particle size analysis and laser diffraction method and using a Malvern, Master Size 2000 laser particle size analyzer. The test results are shown in Table 3.

(4) Determination method of total free lithium content

Accurately weigh 30g$\pm$0.01g of sample, put the sample into a 250ml conical flask, put in a magnetic stirrer, and add 100ml of deionized water; put the conical flask on the magnetic stirrer, turn on the stirrer, and stir for 30min; filter a mixed solution by shaped filter paper and a funnel; transfer 50ml of filtrate with a 50ml pipette, put in a 100ml beaker, and put in magneton; put the beaker on the magnetic stirrer, and add 2 drops of phenolphthalein indicator; titrate with 0.05mol/L of hydrochloric acid standard titration solution until the color of the solution changes from red to colorless, and record the volume $V_1$ (end point 1) of 0.05mol/L of hydrochloric acid standard titration solution; add 2 drops of methyl red indicator, and the indicator color changes from colorless to yellow; titrate with 0.05mol/L of hydrochloric acid standard titration solution until the color of the solution changes from yellow to orange; put and heat the beaker on a heating furnace until the solution boils (the color of the solution changes from orange to yellow); take down the beaker, and cool to a room temperature; and then place the beaker on the magnetic stirrer, titrate with 0.05mol/L hydrochloric acid standard titration solution until the color of the solution changes from yellow to red, and record the volume $V_2$ (end point 2) of 0.05mol/L of hydrochloric acid standard titration solution. The total free lithium content is calculated according to the following formula. The test results are shown in Table 3.

$$\text{Total free lithium content} = V_2 \times 0.05 \times 6.94 \times 2 \times 100\% / (m \times 1000)$$

Total free lithium content-the unit is weight percentage (%);

m--- sample weight, g;
$V_2$---second titration end point, ml;
6.94-atomic weight of lithium

Table 3 Test results of performance parameters of cathode materials prepared in Examples 1-8

| | Percenta ge of pores with particle sizes of 2-20nm | Perce ntage of pores with particle sizes of 3-20nm | Percen tage of pores with particle sizes of 5-19nm | Specific surface area, $m^2/g$ | Total free lithium content (ppm) | Parti cle size, $\mu m$ |
|---|---|---|---|---|---|---|
| Example 1 | 94.92% | 83.56% | 59.92% | 0.67 | 380 | 4.3 |
| Example 2 | 96.48% | 87.71% | 67.07% | 0.53 | 894 | 5.2 |
| Example 3 | 95.93% | 80.48% | 57% | 1.5 | 850 | 2.8 |
| Example 4 | 94.98% | 82.43% | 57.8% | 0.97 | 1076 | 3.5 |
| Example 5 | 94.82% | 80.79% | 58.86% | 1.2 | 1158 | 2.8 |
| Example 6 | 95.69% | 86.4% | 60.23% | 0.48 | 820 | 5.6 |
| Example 7 | 23.8% | 9.93% | 7.18% | 0.32 | 1328 | 10.52 |
| Example 8 | 33.6% | 13.31% | 10.69% | 0.25 | 280 | 9.6 |

**Experiment 2**

Preparation and performance evaluation of lithium-ion battery
A 454261 soft package battery is prepared according to the following method.
Preparation of the positive electrode: add the cathode material of the present invention, the conductive carbon black (S.P), and the polyvinylidene fluoride (PVDF) serving as the binder into the N-methylpyrrolidone (NMP) (a weight ratio of the cathode material to the NMP is 2.1:1) according to a weight ratio of 94:3:3, fully mix, stir to form uniform slurry, coat on an aluminum foil current collector, dry and press into a pole piece.
Preparation of a negative electrode: add the negative electrode artificial graphite, the conductive carbon black (S.P), the carboxymethyl cellulose (CMC) and the binder (SBR) into enough pure water according to a weight ratio of 95:1:1:3, mix, stir to form uniform slurry, coat on the copper foil current collector, dry and press into a pole pieces.
The diaphragm is a PP/PE composite film material. Tabs are spot-welded on the pressed positive and negative pole pieces; the pressed positive and negative pole pieces with the tabs are inserted into the diaphragm, are wound on a winding machine, and then are put into a soft package fixture for sealing of tops and sides; afterwards, the pressed positive and negative pole pieces with the tabs are baked in the oven; 9g of electrolyte is injected in an environment with a relative humidity less than 1.5%; and the electrolyte is a mixed solvent with a mass ratio of EC: DEC: DMC = 1: 1: 1, is 1M of lithium hexafluorophosphate, and is injected, and after formation for 48 hours, vacuumizing and sealing are performed. The model of a battery cell is 454261.
Battery performances are tested on a Hangke battery tester according to the following method.

1) Capacity test

Connect the prepared soft package battery with a test rack, and start the test procedure. Setting steps: set the test temperature at 25°C, stand for 4 hours, charge at constant current and constant voltage for 4 hours (such as 1/3C, charge to 4.2V), pause, stand, discharge at a constant current (such as 1/3C, end at 3.0V), and pause; stand for 4 hours, charge at constant current and constant voltage for 4 hours (such as 1/3C, charge to 4.3V), pause, stand, discharge at a constant current (such as 1C, end at 3.0V), and pause; and repeat the previous steps to obtain capacity data under different voltage conditions.

2) Cycle test

Connect the battery subjected to the above capacity test to the test rack, and start the test procedure. Setting steps: set the test temperature at 45°C, stand for 4 hours, charge at a constant current for 4 hours (such as 1C, charge to 4.2V or 1C, charge to 4.3V), charge at a constant voltage (such as 4.2V for 2 hours or 4.3V for 2 hours), stand for 5 minutes, and discharge at a constant current for 4 hours (such as 1C, end at 3.0V), and stand for 5 minutes; and repeat the previous step of constant-current charging, and carry out the cycle test to obtain the capacity retention rate of different cycles under different voltage conditions.

3) Cyclic DCR growth test:

In the step 2) of the cycle test, add a step of constant-current discharge for 30 seconds before the constant-current discharge (the voltage difference within 30 seconds is recorded, and then the DCR is obtained by dividing the voltage by the current), and the rest is unchanged. Repeat the previous step of constant-current charge, and carry out the cycle test to obtain the growth rate of DCR in different cycles (divide a difference value between the DCR after the cycle and the DCR after the first cycle by the DCR after the first cycle).

Test results are as shown in Table 4.

Table 4 Test results of cycle performance

|  | Cathode material | Capacity (4.2V, 1/3C) | Capacity retention rate (4.2V, 45°C, 200 cycles) | Capacity (4.3V, 1/3C) | Capacity retention rate (4.3V, 45°C, 200 cycles) | DCR growth rate (4.2V, 45°C, after 200 cycles) |
|---|---|---|---|---|---|---|
| BA-S1 | Example 1 | 162.9 | 99.3% | 180.6 | 95.2% | 16.67% |
| BA-S2 | Example 2 | 166.8 | 98.2% | 183.2 | 92.7% | 10.87% |
| BA-S3 | Example 3 | 205.0 | 99.3% | 211.6 | 55.3% | 28.26% |
| BA-S4 | Example 4 | 188.6 | 94.9% | 195.0 | 92.1% | 29.03% |
| BA-S5 | Example 5 | 183.0 | 94.7% | 192.4 | 91.8% | 29.41% |
| BA-S6 | Example 6 | 155.0 | 93.5% | 172.8 | 90.6% | 35.96% |
| BA-S7 | Example 7 | 148.0 | 90.3% | 160 | 55% (100 cycles) | 62.92% |
| BA-S8 | Example 8 | 120.0 | / | / | / | / |
| Note: the capacity of Example 8 is measured at 4.4V, 1/3C. | | | | | | |

As can be seen from Table 3 and FIGs. 1-4, the lithium-ion battery cathode materials prepared in examples 1-6 mainly contain mesopores, the pore sizes of the mesopores are mainly in the range of 2-20nm, the pore volume of the mesopores in the range of 2-20nm accounts for more than 90% of the total pore volume, the pore volume of the pores in the range of 3-20nm accounts for more than 80% of the total pore volume of the mesopores, and the pore volume of the pores in the range of 5-19nm accounts for more than 57% of the total pore volume of the mesopores; the lithium-ion battery cathode materials prepared in Examples 1-6 have a relatively large specific surface area of 0.48-1.5m$^2$/g and a relatively small particle size of 2.8-5.6 $\mu$m; the cathode materials prepared in Examples 7 and 8 mainly contain mesopores and macropores, the mesopores in the range of 2-20nm are relatively few, and the pore volume of the mesopores in the range of 2-20nm accounts for less than 40% of the total pore volume; and the lithium-ion battery cathode materials prepared in examples 7 and 8 have a relatively small specific surface area of 0.25-0.32m$^2$/g and a relatively large particle size of 9.6-10.52 $\mu$m.

As can be seen from Table 4, compared with the lithium-ion battery cathode material of example 7, the lithium-ion battery cathode materials provided by Examples 1-6 have the advantages that the capacity is increased, the cycle performance improves, obviously improves especially at a high voltage, and the growth rate of cyclic DCR is obviously reduced; in Example 7, as the material has more large pores, the material easily cracks during the cycle, therefore, the cycle performance is relatively poor, the material is not suitable for a high voltage, after 100 cycles at 4.3V, the capacity retention rate is only 55%, and the cyclic DCR increases greatly; compared with the material of Example 1, the material of Example 8 has the advantages that the capacity cannot be developed at a low voltage as the manganese content is higher than the nickel content, the capacity can barely be developed at a high voltage, but the capacity is too low to meet the requirement of energy density.

To sum up, the lithium-ion battery cathode material provided by the present invention has mesopores, the pore size of which is mainly in the range of 2-20nm and accounts for more than 90%, and these mesopores provide more shorter paths for lithium ion migration, so that the lithium-ion battery cathode material provided by the present invention has higher capacity; at the same time, during the charge and discharge process of the lithium-ion battery, the cathode material is not easy to crack, and thus, the capacity attenuation of the lithium-ion battery cathode material in the cycle process is prevented.

The above examples are merely preferred examples of the present invention and are not intended to limit the present invention. Any modification, equivalent replacement and improvement made within the spirit and principle of the present invention are intended to be included within the protection scope of the present invention.

**Claims**

1. A lithium-ion battery cathode material, **characterized in that** the cathode material has a porous structure, wherein a pore volume of mesopores with a pore size of 2-20nm accounts for 90% or more of a total volume of total pores.

2. A lithium-ion battery cathode material of claim 1, **characterized in that** a pore volume of pores with a pore size of 3-20nm accounts for 60% or more of a total pore volume of the mesopores, and preferably, a pore volume of pores with a pore size of 5-19nm accounts for 40% or more of a total pore volume of the mesopores.

3. A lithium-ion battery cathode material of claim 1 or 2, **characterized in that** the specific surface area of the cathode material is 0.25-1.5m$^2$/g, preferably, the particle size of $D_V50$ particles of the cathode material is 2.00-6.00 $\mu$m, and further preferably, the total free lithium content of the cathode material is less than 2000ppm.

4. A lithium-ion battery cathode material of any one of claims 1 to 3, **characterized in that** the cathode material contains lithium element, nickel and manganese element, and the content of the nickel element in the cathode material is greater than that of the manganese element.

5. A lithium-ion battery cathode material of any one of claims 1 to 4, **characterized in that** the cathode material contains elements as defined in a chemical formula 1;

   the chemical formula 1 is: $Li_{1+a}Ni_xMn_yCo_zA_mO_2$, where $0 \le a \le 0.25$, $0.5 < x \le 0.97$, $0 < y \le 0.42$, $0 \le z \le 0.09$, $0 \le m \le 0.03$,
   wherein A is selected from any one or two or more elements of Mn, Co, Al, Zr, Y, Rb, Cs, W, Ce, Mo, Ba, Ti, Mg, Ta, Nb, Ca, V, Sc, Sr and B, or from phosphorus-containing compounds containing at least one element of Ti, Al, Mg, Zr, La and Li.

6. A preparation method of the lithium-ion battery cathode material of any one of claims 1 to 5, **characterized in that** the preparation method comprises steps of mixing raw materials, then sintering at least twice and crushing at least twice.

7. The preparation method of claim 6, **characterized in that** the first sintering temperature is 750-980°C, and the constant temperature time is 8-40 hours; the second sintering temperature is 650-920°C, and the constant temperature time is 5-20 hours; and preferably, the sintering atmosphere is air, oxygen or mixed gas of air and oxygen.

8. The preparation method of claim 6 or 7, **characterized in that** the preparation method of the lithium-ion battery cathode material further comprises the following steps:

(1) mixing crushed products with a metal A source ; and
(2) sintering and crushing a mixture in step (1).

9. The preparation method of claim 8, **characterized in that** the sintering temperature in step (2) is 300-780°C, the constant temperature time is 3-14 hours, and preferably, the sintering atmosphere is air, oxygen or mixed gas of air and oxygen.

10. The preparation method of any one of claims 6-9, **characterized in that** the Li source is lithium-containing oxide, lithium-containing fluoride or lithium-containing salt, and preferably, the Li source is selected from one or more than two of lithium hydroxide anhydrous, lithium hydroxide monohydrate, lithium carbonate, lithium nitrate, lithium acetate and lithium fluoride.

11. A lithium-ion battery cathode material, **characterized by** being prepared by a preparation method of any one of claims 6-10.

12. A lithium-ion battery positive electrode, **characterized by** comprising a current collector and a cathode material loaded on the current collector, wherein the cathode material is the lithium-ion battery cathode material of any one of claims 1 to 5 or claim 11.

13. A lithium-ion battery, **characterized by** comprising a positive electrode, a negative electrode and a lithium salt-containing electrolyte, wherein the positive electrode is the lithium-ion battery positive electrode of claim 12.

14. An application of the lithium-ion battery cathode material of any one of claims 1 to 5 or claim 11, or the lithium-ion battery positive electrode of claim 12, or the lithium-ion battery of claim 13 in the field of digital batteries, power batteries or energy storage batteries.

**Fig. 1**

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102280636 A
- CN 108123119 A
- CN 1856890
- CN 104272520 A